## Europäisches Patentamt
## European Patent Office
## Office européen des brevets

(19)

(11) Numéro de publication: **0 202 135**
**B1**

(12) **FASCICULE DE BREVET EUROPEEN**

(45) Date de publication du fascicule du brevet:
04.10.89

(51) Int. Cl.⁴: **B62B 3/10**

(21) Numéro de dépôt: **86400730.7**

(22) Date de dépôt: **04.04.86**

(54) Chariot à récipients amovibles à l'usage des clients de supermarchés.

(30) Priorité: 12.04.85 FR 8505545
27.06.85 FR 8509784

(43) Date de publication de la demande:
20.11.86 Bulletin 86/47

(45) Mention de la délivrance du brevet:
04.10.89 Bulletin 89/40

(84) Etats contractants désignés:
AT BE CH DE FR GB IT LI LU NL SE

(56) Documents cités:
WO-A-84/00940
FR-A-2 539 288
FR-A-2 562 019
FR-A-2 569 151
US-A-3 326 571

(73) Titulaire: LIVRATEL Société Anonyme, 36, rue des Etats Généraux, F-78000 Versailles(FR)

(72) Inventeur: Avot, Jean-Pierre, 6 Grande Rue, F-78350 Les Loges en Josas(FR)

(74) Mandataire: Brot, Philippe et al, CABINET BROT et JOLLY 83, rue d'Amsterdam, F-75008 Paris(FR)

## Description

La présente invention concerne un chariot de manutention pour le transport des marchandises et plus particulièrement un chariot du type qui est couramment utilisé dans les supermarchés à libre service.

On sait que les chariots de ce type comprennent généralement un panier métallique de structure grillagée qui est fixé solidairement sur un socle monté sur roulettes, ledit panier étant muni d'une poignée transversale pour le déplacement du chariot.

Ces chariots sont généralement lourds et coûteux en raison de la quantité de métal utilisée pour la fabrication du panier. D'autre part, du fait que le panier est inséparable de son socle et est de toute façon la propriété inaliénable du supermarché, il est nécessaire de transvaser les marchandises soit dans des sachets distribués ou achetés, soit directement dans le coffre de la voiture du client. Dans un cas comme dans l'autre, ce transvasement constitue une opération longue et souvent dommageable pour les marchandises. De plus, la fourniture de sachets gratuits aux clients grève forcément le coût des marchandises.

C'est pourquoi il a déjà proposé par le passé un certain nombre de types de chariots qui remédient à ces inconvénients par le fait qu'ils comprennent des moyens pour l'accrochage de corbeilles ou de sacs amovibles, lesquels peuvent donc être séparés du chariot et emportés par le client.

C'est ainsi que l'on connaît par le brevet FR 1 163 199 un chariot de manutention comportant une plate-forme montée sur roulettes, deux montants latéraux inclinés et portant deux séries de crochets superposés susceptibles de recevoir deux corbeilles étagées. Tous les éléments de ce chariot sont réalisés avec des tubes métalliques soudés entre eux, qui confèrent au chariot un aspect inesthétique et massif. De plus, en raison de la quantité de matière utilisée, un tel chariot est lourd et d'un prix de revient élevé.

Le brevet PCT 84 00940, qui correspond au préamble de la revendication 1, concerne un chariot de manutention qui comporte, au-dessus d'un socle sur roulettes, un réceptacle muni de moyens pour l'accrochage des anses de sacs amovibles. Le réceptacle n'est pas démontable, de sorte que le chariot même vide est lourd et relativement encombrant.

Par le brevet DE 2 557 976, on connaît un chariot du type poussette comprenant deux cadres rectangulaires articulés sensiblement au milieu de leurs montants inclinés, et qui comporte sur ces montants des crochets pour la suspension d'un sac. Ce dernier a une forme parallélépipèdique et présente au bord supérieur de chacun de ses deux côtés longitudinaux, deux bretelles soudées par leurs extrémités sur la paroi du sac de façon à former des passages tubulaires. Deux tiges ou baguettes de préhension sont introduites à travers lesdits passages, et leurs portions dénudées comprises entre les bretelles servent à la préhension par les mains de l'utilisateur. Un tel chariot est beaucoup moins lourd et encombrant que les précédents, mais il est relativement fragile et ne peut de ce fait transporter qu'un seul sac de faible poids. Aussi un tel chariot ne peut-il être mis à la disposition de la clientèle dans les supermarchés, mais il convient plutôt pour être la propriété personnelle de chaque client.

Les brevets GB 2 116 490 et CA 1 124 275 concernent chacun un chariot portant un panier métallique dans lequel peut être posée une ou plusieurs corbeilles amovibles, mais du fait que le panier n'est pas démontable, ces chariots sont relativement lourds et encombrants.

La présente invention propose un chariot de manutention exempt de tous les inconvénients des chariots de la technique antérieure citée, c'est-à-dire un chariot qui soit robuste bien que léger, très peu encombrant et qui puisse transporter un ou plusieurs sacs amovibles.

A cet effet, le chariot selon l'invention est du type comprenant un socle monté sur roulettes orientables, deux montants verticaux et des traverses reliant lesdits montants à leur partie inférieure et à leur partie supérieure, ledit chariot étant caractérisé en ce qu'il comprend au moins deux manchons tubulaires fixés à la partie supérieure des montants ou sur la traverse supérieure, en position sensiblement horizontale et perpendiculaire au plan formé par les montants, lesdits manchons présentant une fente longitudinale qui s'étend tout le long de leur génératrice inférieure, et en ce que lesdits manchons servent à accrocher des sacs parallélépipèdiques comprenant à leur partie supérieure deux paires de bretelles d'accrochage constituées par des bandes souples fixées par une de leurs extrémités sur le bord supérieur des parois longitudinales du sac et qui sont repliées et fixées sur elles-mêmes à leur autre extrémité, de manière que dans les passages formés par les deux bretelles relatives à chaque côté longitudinal du sac, deux baguettes rigides puissent être introduites, chaque baguette étant glissée sur au moins une portion de sa longueur à l'intérieur des manchons, et les bretelles passant à travers la fente des manchons.

Pour accrocher un tel sac sur le chariot, on fait glisser les deux baguettes du sac dans deux manchons adjacents, la fente longitudinale de ces derniers permettant le libre passage des bretelles. Avantageusement, les manchons ont une longueur double de la largeur de chaque bretelle, et comportent au milieu de leur longueur une butée interne destinée à limiter l'enfoncement de la baguette. Il en résulte que deux sacs peuvent être accrochés sur deux manchons adjacents, un à chacune des extrémités desdits manchons. Les sacs sont ainsi accrochés en porte-à-faux puisque seule la portion de chaque baguette qui est recouverte par une bretelle est engagée dans le manchon correspondant, le restant de la longueur des baguettes n'étant pas supporté.

La traverse inférieure du chariot est avantageusement conformée en plaque plate verticale, contre laquelle le fond du sac qui comporte lui-même une plaque rigide vient en butée. La coopération de la plaque de fond du sac et de ladite traverse inférieure empêche que, sous l'action du poids du sac, les portions des baguettes en porte-à-faux ne prennent une flèche trop importante.

Dans une variante de réalisation de l'invention, les bretelles du sac sont maintenues serrées autour des baguettes au moyen de fourreaux élastiques tubulaires, fendus longitudinalement et ayant un diamètre interne légèrement inférieur à celui des baguettes et un diamètre externe inférieur au diamètre intérieur des manchons, les extrémités des manchons étant évasées afin de faciliter l'introduction des baguettes et présentant deux languettes obtenues par rabattement vers l'intérieur et vers le haut des bords terminaux du manchons situés de part et d'autre de la fente, jusqu'à un niveau où elles forment des butées pour les fourreaux en cas de retrait accidentel du sac.

L'invention sera décrite à présent un détail en regard des dessins annexés dans lesquels:

- la figure 1 est une vue en perspective d'un chariot selon un premier mode de réalisation pour l'accrochage de sacs à bretelles et baguettes;
- la figure 2 montre une variante de réalisation des manchons d'accrochage, et correspondant à une vue en coupe suivant la ligne II-II de la figure 1;
- la figure 3 est une vue en perspective partielle d'un autre mode de réalisation du système d'accrochage d'un sac à bretelles et baguettes;
- la figure 4 est une vue en coupe suivant la ligne IV-IV de la figure 3;
- la figure 5 est une vue en coupe suivant la ligne V-V de la figure 4;
- la figure 6 est une vue en perspective d'un chariot selon un troisième mode de réalisation; et
- la figure 7 est une vue en perspective d'un chariot selon un quatrième mode de réalisation.

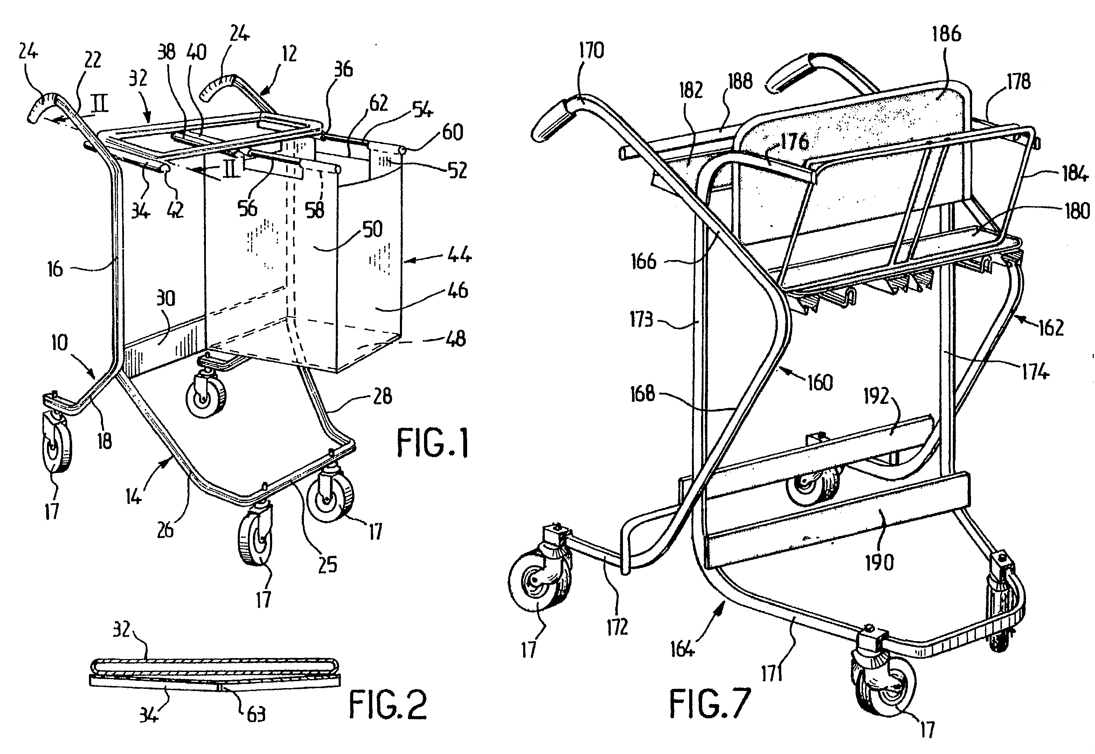

Le chariot représenté sur la figure 1 comprend une structure support formée de trois éléments tubulaires 10, 12, 14 soudés entre eux. Les deux premiers éléments 10, 12 sont identiques et sont disposés dans deux plans verticaux sensiblement parallèles. Ils ont une forme sensiblement en U, et comprennent chacun un bras vertical ou montant 16, un bras inférieur 18 incliné vers le bas et se prolongeant par une portion horizontale sur laquelle est fixée une roulette pivotante 17, et un bras supérieur 21 incliné vers le haut et se terminant par une poignée 23 pour la manœuvre et le guidage du chariot. Les bras 18 et 21 sont coudés vers l'arrière du chariot, c'est-à-dire du côté où se place le client lorsqu'il conduit le chariot.

Le troisième élément tubulaire 14 présente également une forme en U comportant un bras central horizontal 25 muni de deux roulettes pivotantes 17 et deux bras latéraux 26, 28 coudés vers l'arrière et légèrement inclinés vers le haut. Les extrémités des bras 26, 28 sont fixées par rivetage, soudage ou autre, respectivement sur les éléments tubulaires 10, 12, sensiblement au niveau de l'extrémité inférieure des montants 16.

Les éléments tubulaires 10, 12 sont disposés dans deux plans verticaux parallèles et sont reliés entre eux d'une part, par une traverse inférieure 30 constituée par une plaque plate verticale et qui est fixée par rivetage ou soudage aux extrémités inférieures des montants, et d'autre part, par une traverse supérieure qui, dans le cas présent, est constituée par un cadre rectangulaire 32 de structure tubulaire, qui est disposé horizontalement et est soudé par le milieu de ses petits côtés sur les montants. Ce cadre peut servir à porter des produits volumineux on pondéreux.

Sous les deux petits côtés du cadre sont fixés deux manchons cylindriques latéraux 34, 36 qui sont donc parallèles à l'axe longitudinal du chariot. Deux autres manchons 38, 40 parallèles aux deux premiers sont montés sous le cadre et sont soudés par leurs extrémités au milieu des grandes côtés de ce dernier. Ces quatre manchons présentent chacun une fente longitudinale 42 s'étendant tout le long de sa génératrice inférieure.

Sur ce chariot peuvent être accrochés des sacs parallélépipèdiques 44 dont les parois transversales 46 ont une largeur à peu près égale à la distance comprise entre un manchon latéral 34 ou 36 et le manchon central 38 ou 40 adjacent. Le fond du sac est maintenu plat au moyen d'une plaque rigide 48. Le sac est pourvu sur le bord supérieur de chacune de ses deux parois longitudinales 50, de deux bretelles 52. Celles-ci peuvent être soit constituées par des bandes séparées de matière plastique que l'on soude sur le sac, soit, de préférence, découpées en une seule pièce avec les parois longitudinales 50. Les bretelles associées à chaque paroi longitudinale s'enroulent autour des extrémités d'une baguette de préhension 54, 56 et sont rabattues vers l'intérieur du sac et fixées par soudure ou collage. Pour empêcher les baguettes de glisser hors des bretelles, celles-ci sont étroitement serrées sur les baguettes grâce à des lignes de soudure longitudinales 58 entre les deux parois des bretelles, et à des lignes de soudure terminales 60 qui ferment les bretelles au-delà des extrémités des baguettes.

Une fois les baguettes en place dans les bretelles, celles-ci définissent sur chaque paroi longitudinale une échancrure 62 à travers laquelle la main peut être passée pour saisir la portion centrale de baguette qui n'est pas recouverte par les bretelles. Chaque bretelle a une largeur sensiblement égale au tiers de la longueur de la baguette.

Pour accrocher un sac au chariot, on fait glisser les deux baguettes 54, 56 dans deux manchons adjacents 34, 38 ou 36, 40. Dans ce mouvement, les bretelles passent librement à travers les fentes 42.

Dans la variante de réalisation de la figure 2, les manchons ont une longueur sensiblement double de la largeur des bretelles et sont munis en leur milieu d'une butée interne 63, destinée à limiter l'introduction des baguettes à une longueur correspondant à la largeur des bretelles, soit environ le tiers de la longueur totale des baguettes. Il en résulte que les sacs peuvent être introduits indifféremment par l'une ou l'autre des extrémités des manchons, et que l'on peut suspendre quatre sacs sur le chariot. Les sacs sont accrochés en porte-à-faux puisque les deux tiers environ des baguettes sont libres. Pour éviter que les baguettes ne fléchissent trop sous le poids du sac, on les réalisera en une matière dure peu flexible. De plus, on donnera au sac une hauteur telle qu'en position suspendue, son fond 48 vienne en butée contre la traverse inférieure 30.

Enfin, lors de la fabrication, on donnera aux manchons 34 à 40 une forme légèrement coudée en leur milieu (voir figure 2), de manière que leurs extrémités libres soient à un niveau légèrement supérieur à celui de la portion centrale. Les sacs sont de ce fait en position stable puisque les baguettes ont tendance à glisser contre les butées 63 et ne risquent donc pas de se décrocher sous l'action de secousses ou de chocs.

Pour décrocher un sac, on saisit les portions dénudées des baguettes en passant les mains dans les échancrures 62 et on tire sur les baguettes pour les dégager des manchons.

Un tel chariot ne comprend que très peu de pièces. Il est donc léger et bon marché. De plus, sa ligne dépouillée et esthétique, la suspension légèrement élastique des sacs, et la facilité du guidage en font un article très attrayant pour l'utilisateur.

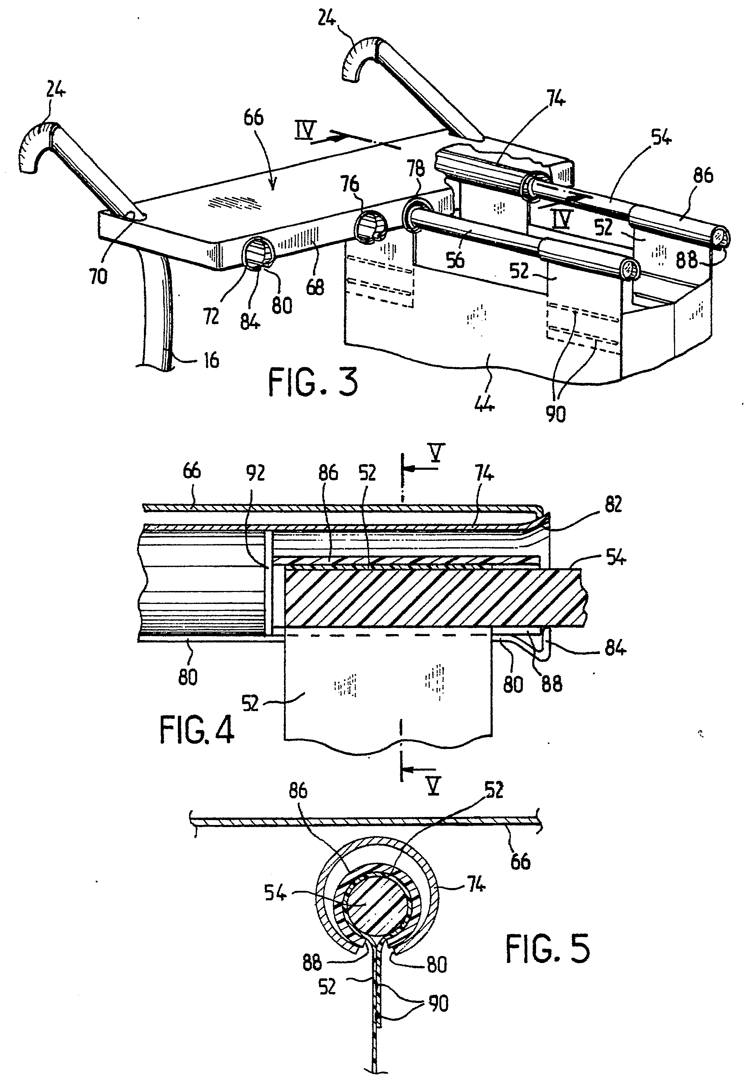

Dans la variante de réalisation de la figure 3, le cadre de la figure 1 est remplacé par une tablette rectangulaire 66 qui comporte un rebord périphérique 68 tourné vers le bas. La tablette présente au voisinage de ses petits côtés deux découpes 70 à travers lesquelles les poignées 23 des montants 16 peuvent être passées lors de la fabrication. Les montants sont soudés ou rivetés au rebord 68 des petits côtés. Sous la tablette sont fixés quatre manchons horizontaux, parallèles à l'axe longitudinal du chariot, deux manchons 72, 74 étant situés au voisinage des petits côtés de la tablette, les deux autres 76, 78 se trouvant près du milieu de cette dernière.

Les manchons de cette réalisation présentent également une fente longitudinale 80 qui s'étend tout le long de leur génératrice inférieure, mais, comme on peut le voir plus clairement sur la figure 4, ils diffèrent des manchons de la figure 1 par le fait qu'ils se terminent à leurs deux extrémités par des portions évasées 82 et que les extrémités situées de part et d'autre de la fente sont relevées vers l'intérieur des manchons en formant des languettes ou butées 84.

Comme le montrent les figures 3 à 5, les bretelles 52 du sac 44 sont serrées sur les baguettes 54, 56 au moyen de fourreaux tubulaires 86 qui présentent une fente longitudinale 88 sur toute leur longueur. Ces fourreaux sont réalisés en une matière rigide présentant une certaine élasticité et ont un diamètre interne légèrement inférieur au diamètre des baguettes et un diamètre externe nettement inférieur au diamètre interne des manchons. Les fourreaux enserrent ainsi fortement les bretelles sur les baguettes et les bords de leur fente pincent les deux parois des bretelles à la base des baguettes. On peut ainsi se dispenser de souder les bretelles à la base des baguettes et aux extrémités de celles-ci, comme c'était le cas dans le mode de réalisation de la figure 1. Seules deux lignes de soudure 90 sont nécessaires pour relier l'extrémité des bretelles à la paroi du sac.

Comme le montre la figure 4, les languettes 84 font saillie à l'intérieur des manchons sur une hauteur sensiblement égale à l'épaisseur des fourreaux 86.

Ainsi, pour accrocher un sac, on introduit les deux baguettes 54, 56 dans manchons adjacents.

Cette introduction s'effectue rapidement et sans tâtonnement puisque les manchons sont évasés à leurs extrémités. Les baguettes sont enfoncées sour toute la largeur d'un fourreau, la course permise étant limitée par des butées 92 prévues à l'intérieur des manchons, à mi-longueur de ces derniers. Une fois le sac ainsi accroché, les extrémités externes des fourreaux se trouvent au droit des languettes 84 qui, comme on l'a déjà précisé, font saillie dans les manchons d'une hauteur égale à l'épaisseur des fourreaux. Lesdites languettes verrouillent donc les fourreaux contre tout retrait accidentel vers l'avant hors des manchons. Par contre, lorsqu'on veut décrocher le sac, on soulève légèrement les baguettes 54, 56 de manière à dégager les fourreaux 86 hors de portée des languettes, ce qui est possible en raison du diamètre relativement grand des manchons, et l'on peut alors faire sortir entièrement les baguettes des manchons.

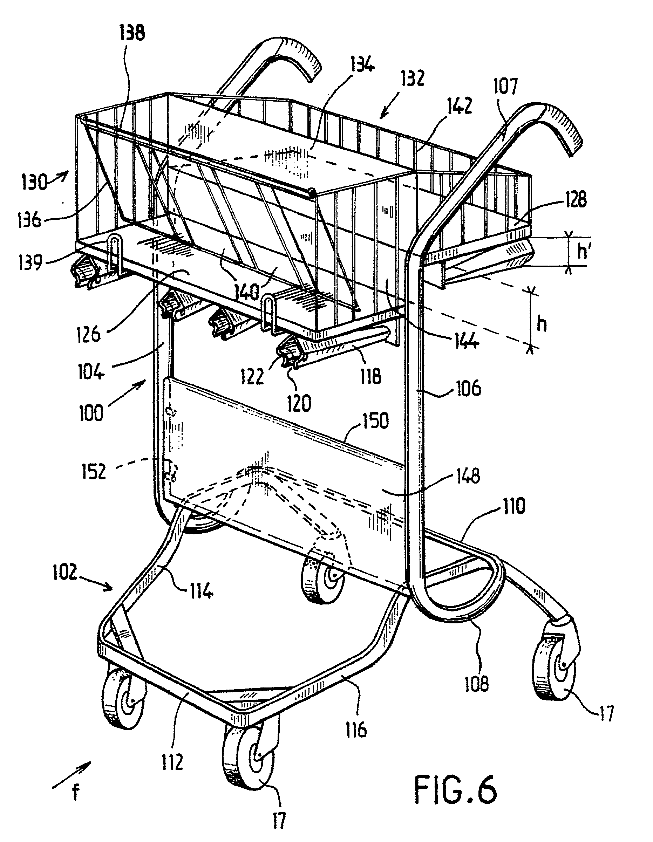

Le chariot représenté à la figure 6 se distingue de celui de la figure 1 par le fait que ses montants et son socle ne sont formés qu'à partir de deux éléments tubulaires profilés sensiblement en U 100 et 102, qui sont convenablement conformés et soudés entre eux. Le premier élément 100 comprend deux branches verticales 104, 106 formant les montants et qui se terminent à leur extrémité supérieure par des poignées recourbées vers l'arrière 107 pour le guidage du chariot. Les montants se prolongent à leur extrémité inférieure par des portions semi-circulaires 108 se courbant vers le haut et qui sont raccordées par une branche transversale horizontale 110. Le second élément tubulaire 102 s'étend dans un plan sensiblement horizontal à la partie inférieure du chariot. Il comprend une branche horizontale transversale 112 et deux branches latérales 114, 116. Aux coins de ladite branche horizontale et aux extrémités des branches latérales sont fixées des roulettes orientables 17. La branche transversale 112 se trouve à un niveau inférieur par rapport à celui de la branche 110 de l'élément 100. Les branches latérales 114, 116 sont d'abord horizontales, puis se relèvent vers le haut jusqu'au niveau de la branche 110 pour redescendre ensuite. Les éléments 100, 102 sont soudés entre eux en quatre points.

Une autre différence réside dans la forme des manchons 118. Ces derniers présentent une forme de tronc de pyramide sur la figure 6, mais ils peuvent également être de forme tronconique. Ils comportent également une fente longitudinale 120. A leur ouverture la plus large, les manchons comportent de part et d'autre de la fente, deux crevés 122 faisant saillie vers l'intérieur et qui ont la même fonction que les languettes 84 de la figure 4.

Les sacs utilisables avec un tel chariot sont les mêmes que celui 44 montré à la figure 3. La section des manchons 118 à leur extrémité étroite est légèrement inférieure à celle des fourreaux 86. Il en résulte que lorsqu'une baguette 56 est enfoncée dans un manchon 118, son extrémité vient se coincer dans la section étroite de ce dernier. On évite ainsi que les baguettes se soulèvent à l'intérieur des manchons, sous le poids du sac.

Les manchons sont fixés sous les fonds 126, 128 de paniers 130, 132 qui sont disposés de part et d'autre du plan formé par les montants 104, 106. Lesdits fonds sont constitués par des tablettes rectangulaires plates qui s'insèrent exactement entre les montants. Le panier 130 est de forme parallélépipèdique et ses parois latérales sont réalisées avec des fils rigides, mais elles peuvent aussi bien être pleines. Pour la clarté du dessin, la paroi dorsale 134 du panier 130 a été représentée sous forme de plaque pleine. Elle est verticale et se situe sensiblement dans le plan formé par les montants.

Le panier 130 est fixé sur ces derniers par tout moyen approprié, par exemple par soudage. La paroi antérieure 136 de ce panier est montée pivotante tout le long de son grand côté supérieur, autour d'une tige transversale 138 formant le bord supérieur du panier. En position de repos, la paroi antérieure pend vers le bas formant ainsi le côté antérieur du panier. Des butées 139 sont prévues pour empêcher ladite paroi de pivoter au-delà de sa position verticale vers l'extérieur du panier.

Ce panier peut servir pour y faire asseoir deux bébés. A cet effet, la paroi antérieure 136 est formée de tiges verticales qui définissent entre elles quatre ouvertures 140 à travers lesquelles on peut faire passer les jambes des bébés, la paroi dorsale 134 servant alors de dossier.

L'autre panier 132 sert à transporter des produits pondéreux ou volumineux qui ne peuvent être introduits dans les sacs. Il présente une forme en tronc de pyramide dont la grande base est constituée par la paroi dorsale 134, et dont la petite base est constituée par la paroi arrière opposée 142. Le fond horizontal 128 de ce panier est plat et ses petits côtés convergent légèrement depuis la plaque dorsale vers la paroi 142. De même, la hauteur du panier diminue progressivement depuis la paroi dorsale jusqu'à la paroi 142.

Le fond 128 du panier 132 est à un niveau supérieur par rapport à celui du fond 126 du panier 130, la différence de niveau $\underline{h}$ étant au moins égale à la hauteur $\underline{h'}$ des manchons 118 au droit de leur ouverture la plus large. Les fonds 126 et 128 se raccordent par une plaque frontale 144.

Il résulte de ce dimensionnement que les chariots peuvent être emboîtés les uns à la suite des autres. Si en effet un chariot, non représenté, est amené dans le sens de la flèche $\underline{f}$ sur la figure 6, son panier 128 qui, comme on l'a déjà précisé, a une forme en tronc de pyramide, vient s'emboîter à l'intérieur du panier porte-bébés 130 du chariot représenté sur la figure 6, sans que les parois ni le fond de ce panier ne s'opposent à l'emboîtement. Le panier 132 et les manchons qui sont fixés sous lui viennent donc se loger exactement dans le panier 130 de l'autre chariot. Au cours de l'emboîtement, le panier 132 fait pivoter la paroi antérieure 136 autour de l'axe 138 pour l'amener en position sensiblement horizontale. La course d'emboîtement permise est définie par la mise en butée de la paroi arrière 142 du panier 132 contre la plaque frontale 144. On notera que la forme en U ouvert du socle 102 autorise également l'emboîtement des chariots.

La traverse inférieure 148 du chariot est démontable dans cette forme de réalisation. Elle peut par exemple être constituée par une plaque métallique repliée autour d'une ligne de pliage 150, cette plaque venant se fixer par coulissement sur des moyens de fixation 152 portés par les montants. Outre sa fonction déjà signalée de butée pour les sacs, cette traverse peut recevoir sur ses deux faces des annonces publicitaires. C'est pourquoi on lui donnera une hauteur supérieure à celle de la traverse 30 du chariot de la figure 1.

Avec référence à présent à la figure 7, le chariot selon ce mode de réalisation comprend comme dans celui de la figure 1, une structure support formée de trois éléments tubulaires 160, 162, 164 sensiblement en U, soudés entre eux. Les éléments 160, 162 sont identiques et sont disposés dans deux plans verticaux parallèles. Ils comprennent chacun deux branches 166, 168 coudées en V se terminant respectivement par une poignée de préhension 170 et par une portion horizontale 172 coudée vers l'arrière et munie d'une roulette orientable 17. Le troisième élément 164 comprend une portion inférieure 170 en U située dans un plan horizontal et portant deux roulettes orientables 17. Les branches de ladite portion en U sont coudées et se prolongent vers le haut par des montants 173, 174 coudés vers l'avant à leur extrémité supérieure pour former des portions horizontales 176, 178. Les montants 173, 174 sont soudés à leur point de croisement avec les branches 166, 168 en V. Sur les branches 166 des éléments 160, 162 sont soudées, de part et d'autre des montants 173, 174, deux tablettes 180, 182 sensiblement horizontales et de préférence légèrement inclinées vers le bas et l'une vers l'autre. La tablette 180 située en avant des montants sert de siège pour un bébé, tandis que celle qui est derrière les montants sert à supporter des produits volumineux ne pouvant être introduits dans les sacs.

L'emplacement du bébé est limité latéralement par les portions horizontales 176, 178 susmentionnées, sur le devant par un simple cadre en tige métallique 184 qui pend vers le bas et est monté pivotant sur lesdites portions horizontales, et à l'arrière par une plaque dorsale 186.

Comme dans le mode de réalisation de la figure 6, des manchons 170 sont fixés sous les tablettes 180, 182 pour l'accrochage de un à quatre sacs.

Les branches 166 sont entretoisées par une traverse 188 servant d'appui aux produits que l'on dispose sur la tablette 182. De même, les montants 173, 174 d'une part et les branches 168 d'autre part sont entretoisées par des traverses 190, 192 contre lesquelles les fonds 48 des sacs viennent en butée, comme expliqué à propos de la figure 1.

**Revendications**

1. Chariot de manutention à l'usage des clients de supermarchés, du type comprenant un socle (14, 18; 102; 171, 172) monté sur roulettes orientables (17), deux montants verticaux (16; 104, 106; 173, 174), et des traverses (30, 32; 126, 128; 180, 182) reliant lesdits montants à leur partie inférieure et à leur partie supérieure, ledit chariot étant caractérisé en ce qu'il comprend au moins deux manchons tubulaires (34 à 40; 72 à 78; 122) fixés à la partie supérieure des montants ou sur la traverse supérieure (32;

126, 128; 180, 182), en position sensiblement horizontale et perpendiculaire au plan formé par les montants, lesdits manchons présentant une fente longitudinale (42; 80; 120) qui s'étend tout le long de leur génératrice inférieure, et en ce que lesdits manchons servent à accrocher des sacs parallélépipèdiques (44) comprenant à leur partie supérieure deux paires de bretelles d'accrochage (52) constituées par des bandes souples fixées par une de leurs extrémités sur le bord supérieur des parois longitudinales du sac, et qui sont repliées et fixées sur elles-mêmes à leur autre extrémité, de manière que dans les passages formés par les deux bretelles relatives à chaque côté longitudinal du sac deux baguettes rigides (54, 56) puissent être introduites, chaque baguette étant glissée sur au moins une portion de sa longueur à l'intérieur des manchons, et les bretelles passant à travers la fente des manchons.

2. Chariot de manutention selon la revendication 1, caractérisé en ce que chaque manchon (34 à 40) a une longueur double de la largeur d'une bretelle (52) et comporte au milieu de sa longueur une butée interne (63), de sorte qu'une baguette peut être introduite par chaque extrémité du manchon, les deux baguettes relatives à un même manchon venant en appui contre ladite butée interne (63).

3. Chariot de manutention selon la revendication 2, caractérisé en ce que les deux portions de manchon situées de part et d'autre de la butée interne (63) sont légèrement inclinées par rapport à l'horizontale et vers le bas, depuis leur extrémité libre jusqu'à la portion médiane contenant la butée interne, de manière que les baguettes reçues dans lesdites portions de manchon aient tendance à glisser en appui contre la butée interne (63).

4. Chariot de manutention selon la revendication 1, caractérisé en ce que les bretelles (52) du sac sont maintenues serrées autour des baguettes (54, 56) au moyen de fourreaux élastiques tubulaires (86), fendus longitudinalement et ayant un diamètre interne légèrement inférieur à celui des baguettes et un diamètre externe inférieur au diamètre intérieur des manchons, les extrémités (82) des manchons étant évasées afin de faciliter l'introduction des baguettes et présentant deux languettes (84) obtenues par rabattement vers l'intérieur et vers le haut des bords terminaux du manchon situés de part et d'autre de la fente (88), jusqu'à un niveau où elles forment des butées pour les fourreaux (86) en cas de retrait accidentel du sac.

5. Chariot de manutention selon la revendication 4, caractérisé en ce que les manchons (118) ont une forme tronconique ou en tronc de pyramide, dont les ouvertures large et étroite ont des sections respectivement plus grande et plus petite que la section des baguettes (54, 56) des sacs, l'ouverture large présentant des crevés (122) vers l'intérieur qui forment butée pour les fourreaux (86).

6. Chariot de manutention selon la revendication 5, caractérisé en ce que chaque manchon est légèrement incliné par rapport à l'horizontale et vers le bas, depuis son extrémité de plus grande section jusqu'à son extrémité de plus faible section, de manière que la baguette ait tendance à venir se coincer dans ladite extrémité de faible section.

7. Chariot de manutention selon la revendication 1, caractérisé en ce que la traverse inférieure (30, 148, 190, 192) est conformée en plaque verticale située sensiblement au même niveau que le fond du sac (44) lorsque ce dernier est en position suspendue aux manchons, de manière à servir de butée latérale pour ledit fond.

8. Chariot de manutention selon la revendication 7, caractérisé en ce que le fond du sac est rigidifié par une plaque rigide (48).

9. Chariot de manutention selon la revendication 1, caractérisé en ce qu'il comprend deux éléments tubulaires identiques (10, 12), de forme sensiblement en U, présentant un bras vertical (16) formant un montant du chariot, un bras inférieur (18) coudé vers le bas et vers l'arrière et comportant une portion horizontale sur laquelle est fixée une roulette pivotante (17) et un bras supérieur (21) incliné vers le haut et vers l'arrière et se terminant par une poignée (24) pour la manoeuvre et le guidage du chariot, et un troisième élément tubulaire (14) en forme de U, dont les extrémités de ses bras (26, 28) sont fixées par rivetage, soudage ou autre, respectivement sur les éléments tubulaires (10, 12), sensiblement au niveau de l'extrémité inférieure des montants (16), les deux premiers éléments tubulaires (10, 12) étant disposés dans deux plans verticaux parallèles et étant reliés entre eux d'une part, par une traverse inférieure (30) constituée par une plaque plate verticale et qui est fixée par rivetage ou soudage aux extrémités inférieures des montants, et d'autre part, par une traverse supérieure constituée par un cadre rectangulaire horizontal (32) soudé par les milieux de ses petits côtés sur les montants.

10. Chariot de manutention selon la revendication 9, caractérisé en ce que les deux premiers éléments tubulaires (10, 12) sont reliés entre eux à la partie supérieure des montants (16) par une tablette (66) rectangulaire et horizontale, comportant un rebord périphérique (68) tourné vers le bas, la tablette présentant au voisinage de ses petits côtés deux découpes (70) à travers lesquelles les poignées (24) des montants (16) peuvent être passées lors de la fabrication, et en ce que les manchons (72 à 78) sont fixés sous ladite tablette.

11. Chariot de manutention selon la revendication 1, caractérisé en ce qu'il comprend deux éléments tubulaires (100, 102) convenablement recourbés en U et soudés entre eux, le premier élément (100) comprenant les montants (104, 106) et les poignées de manoeuvre (107), tandis que le second élément (102) forme un socle pour le chariot et porte quatre roulettes orientables (17).

12. Chariot de manutention selon la revendication 11, caractérisé en ce qu'il comporte un panier porte-bébés (130) et un panier porte-paquets (132) fixés entre les montants (104, 106) à la partie supérieure de ces derniers, et de part et d'autre du plan formé par les montants, le panier porte-bébés (130) étant de forme parallélépipèdique avec un fond (126) plat et présentant une paroi antérieure (136) montée pivotante entre une position pendante verticale et une position relevée vers l'intérieur et dans laquelle sont formées des ouvertures (140) pour le passage des jambes du bébé, le panier porte-paquets (132) ayant une forme en tronc de pyramide s'effilant vers l'arrière du chariot, et en ce que les manchons (118) sont fixés sous les fonds (126, 128) desdits paniers, le fond (128) du panier porte-paquets étant à un niveau supérieur par rapport à celui du fond (126), la différence de niveau (h) étant au moins égale à la hauteur (h') des manchons au droit de leur ouverture large, de manière que le panier porte-paquets d'un chariot puisse s'emboîter dans le panier porte-bébés d'un autre chariot.

13. Chariot de manutention selon la revendication 1, caractérisé en ce qu'il comprend deux éléments tubulaires (160, 162) identiques courbés en V, dont les branches (166, 168) se terminent à leurs extrémités par une poignée de manoeuvre (170) et par une portion horizontale (172) portant une roulette orientable (17) et un troisième élément tubulaire (164) sensiblement en U, dont les bras (173, 174) forment des montants verticaux, lesdits montants se raccordant à leur extrémité inférieure par une portion tubulaire en U (170) située dans un plan horizontal, les deux premiers éléments tubulaires étant disposés dans deux plans verticaux parallèles et étant soudés par leurs branches (166, 168) aux montants (173, 174), deux tablettes horizontales (180, 182) étant soudées, à des niveaux différents, aux montants et aux branches supérieures (166) des éléments en V pour servir respectivement de porte-bébés et de porte-bagages pour produits volumineux.

## Patentansprüche

1. Einkaufswagen zum Gebrauch für Supermarktkunden, des Typs mit einem auf schwenkbaren Rollen (17) gelagerten Sockel (14, 18; 102; 171, 172), mit zwei vertikalen Stützen (16; 104, 106; 173, 174) und mit die Stützen in ihrem oberen und unteren Bereich verbindenden Querstreben (30, 32; 126, 128; 180, 182), dadurch gekennzeichnet, daß der Wagen wenigstens zwei rohrförmige Muffen (34 bis 40; 72 bis 78; 122) aufweist, welche im oberen Bereich der Stützen oder an der oberen Querstrebe (32; 126, 128; 180, 182) festgelegt sind und in im wesentlichen horizontaler Position und normal auf die durch die Stützen gebildete Ebene angeordnet sind, wobei die Muffen einen Längsschlitz (42; 80; 120) aufweisen, welcher sich über die gesamte Länge längs der unteren Erzeugenden erstreckt, und daß die Muffen zum Einhängen parallelepipedischer Behälter (44) dienen, welche in ihrem oberen Bereich zwei Paare von von biegsamen Bändern gebildete Einhängegurten (52) aufweisen, welche mit einem ihrer Enden am oberen Rand der Längswände der Behälter befestigt sind und welche umgebogen werden und an sich selbst an ihren anderen Enden befestigt werden, so daß in den von zwei einer Längsseite des Behälters zugeordneten Gurten gebildeten Durchtrittsöffnungen zwei starre Stäbe (54, 56) eingeführt werden können, wobei jeder Stab über wenigstens einen Teil seiner Länge im Inneren der Muffen gleitend geführt ist und die Gurte durch den Schlitz der Muffen hindurchtreten.

2. Einkaufswagen nach Anspruch 1, dadurch gekennzeichnet, daß jede Muffe (34 bis 40) eine Länge aufweist, welche das Doppelte der Breite eines Gurtes (52) beträgt, und daß sie in der Mitte ihrer Länge einen inneren Anschlag (63) aufweist, so daß ein Stab durch jedes Ende der Muffe eingeführt werden kann und zwei einer Muffe zugeordnete Stäbe in Anlage an den inneren Anschlag (63) gelangen.

3. Einkaufswagen nach Anspruch 2, dadurch gekennzeichnet, daß die zwei zu beiden Seiten des inneren Anschlages (63) angeordneten Bereiche einer Muffe ausgehend von ihren freien Enden zum den inneren Anschlag aufweisenden Mittenbereich leicht relativ zur Horizontalen und nach unten geneigt sind, so daß die in den Abschnitten der Muffe aufgenommenen Stäbe zu einem Gleiten in Anlage an den inneren Anschlag (63) tendieren.

4. Einkaufswagen nach Anspruch 1, dadurch gekennzeichnet, daß die Gurte (52) des Behälters um die Stäbe (54, 56) mittels elastischer, rohrförmiger Hülsen (86) festgeklemmt sind, welche in Längsrichtung geschlitzt sind und einen geringfügig kleineren Innendurchmesser als die Stäbe und einen geringfügig kleineren Außendurchmesser als den Innendurchmesser der Muffen aufweisen, wobei die Enden (82) der Muffen zur Erleichterung des Einführens der Stäbe sich konisch erweiternd ausgebildet sind und zwei Zungen (84) aufweisen, welche durch ein Zurückschlagen nach innen und nach oben der zu beiden Seiten des Schlitzes (88) angeordneten Endborde bis auf eine Höhe erhalten werden, in welcher sie Anschläge für die Hülsen (86) für den Fall einer zufälligen Entfernung des Behälters bilden.

5. Einkaufswagen nach Anspruch 4, dadurch gekennzeichnet, daß die Muffen (118) kegel- oder pyramidenstumpfförmig ausgebildet sind, deren große und kleine Öffnungen Querschnitte aufweisen, welche größer bzw. kleiner als der Querschnitt der Stäbe (54, 56) der Behälter sind, wobei die große Öffnung zum Inneren Borde (122) aufweist, welche einen Anschlag für die Hülsen (86) bilden.

6. Einkaufswagen nach Anspruch 5, dadurch gekennzeichnet, daß jede Muffe ausgehend von ihrem Ende mit größerem Querschnitt zum den geringeren Querschnitt aufweisenden Ende leicht relativ zur Horizontalen und nach unten geneigt sind, so daß die Stäbe zu einem Verklemmen im Ende mit geringem Querschnitt tendieren.

7. Einkaufswagen nach Anspruch 1, dadurch gekennzeichnet, daß die untere Querstrebe (30, 148, 190, 192) als vertikale Platte ausgebildet ist, welche im wesentlichen auf der Höhe des Bodens des Behälters (44) in an den Muffen aufgehängter Position angeordnet ist, um als seitlicher Anschlag für den Boden zu dienen.

8. Einkaufswagen nach Anspruch 7, dadurch gekennzeichnet, daß der Boden des Behälters durch eine steife Platte (48) versteift ist.

9. Einkaufswagen nach Anspruch 1, dadurch gekennzeichnet, daß er zwei rohrförmige, identische, im wesentlichen U-förmige Elemente (10, 12), welche einen vertikalen, eine Stütze des Wagens bildenden Arm (16) und einen unteren, nach unten und nach hinten gebogenen und einen horizontalen Bereich, an welchem eine schwenkbare Rolle (17) festgelegt ist, aufweisenden Arm (18) sowie einen oberen, nach oben und nach hinten geneigten und in einen Handgriff (24) zur Handhabung und Führung des Wagens endenden Arm (21) aufweisen, und ein drittes, rohrförmiges, U-förmiges Element (14) umfaßt, wobei die Enden seiner Arme (26, 28) durch Nieten, Schweißen od. dgl. jeweils an den rohrförmigen Elementen (10, 12) im wesentlichen auf Höhe des unteren Endes die Stützen (16) festgelegt sind, wobei die zwei ersten rohrförmigen Elemente (10, 12) in zwei vertikalen, parallelen Ebenen angeordnet sind und miteinander einerseits über eine von einer vertikalen Platte gebildete und durch Nieten oder Schweißen an den unteren Enden der Stützen befestigte untere Querstrebe (30) und andererseits über eine von einem rechteckigen, horizontalen und über die Mitten der kurzen Seiten an den Stützen angeschweißten Rahmen (32) gebildete obere Querstrebe verbunden sind.

10. Einkaufswagen nach Anspruch 9, dadurch gekennzeichnet, daß die zwei ersten rohrförmigen Elemente (10, 12) im oberern Bereich der Stützen miteinander über eine rechteckige, horizontale Platte (66) verbunden sind, welche einen nach unten gebogenen Umfangsbord (68) und nahe ihren kurzen Seitenkanten zwei Öffnungen (70) aufweist, durch welche die Handgriffe (24) der Stützen (16) bei der Herstellung durchtreten können, und daß die Muffen (72 bis 78) an der Platte befestigt sind.

11. Einkaufswagen nach Anspruch 1, dadurch gekennzeichnet, daß er zwei rohrförmige, geeignet U-förmig gebogene und miteinander verschweißte Elemente (100, 102) umfaßt, wobei das erste Element (100) die Stützen (104, 106) und die Betätigungshandgriffe (107) umfaßt, während das zweite Element (102), einen Sockel für den Wagen bildet und vier schwenkbare Rollen (17) trägt.

12. Einkaufswagen nach Anspruch 11, dadurch gekennzeichnet, daß er einen Kindertragekorb (130) und einen Pakettragekorb (132) umfaßt, welche zwischen den Stützen (104, 106) im oberen Bereich derselben zu beiden Seiten der von den Stützen aufgespannten Ebene befestigt sind, wobei der Kindertragekorb (130) parallelepipedische Form mit einem ebenen Boden (126) und eine zwischen einer vertikalen Position und einer nach innen aufgerichteten Position verschwenkbare Vorderwand (136) aufweist, welche mit Öffnungen (140) zum Durchtritt der Beine des Kindes ausgebildet sind, und wobei der Pakettragekorb (132) die Form eines sich nach hinten zum Wagen verjüngenden Pyramidenstumpfes aufweist, und daß die Muffen (118) an den Boden (126, 128) der Körbe befestigt sind, wobei der Boden (128) des Pakettragekorbes sich auf größerer Höhe als die Höhe des Bodens (126) befindet und die Höhendifferenz (h) wenigstens gleich der Höhe (h') der Muffen an der Stelle ihrer größten Öffnung ist, so daß der Pakettragekorb eines Wagens in den Kindertragekorb eines anderen Wagens eingeschoben werden kann.

13. Einkaufswagen nach Anspruch 1, dadurch gekennzeichnet, daß er zwei rohrförmige, identische, V-förmig gekrümmte Elemente (160, 162), deren Arme (166, 168) an ihren Enden in einem Handhabungshandgriff (170) und in einen horizontalen, schwenkbare Rollen (17) tragenden Abschnitt (172) enden, und ein drittes rohrförmiges, im wesentlichen U-förmiges Element (164) umfaßt, dessen Arme (173, 174) die vertikalen Stützen bilden, wobei die Stützen an ihrem unteren Ende über einen U-förmigen rohrförmigen Abschnitt (170), in einer horizontalen Ebene verbunden sind, wobei die zwei ersten rohrförmigen Elemente in zwei vertikalen, parallelen Ebenen angeordnet sind und mit ihren Armen (166, 168) mit den Stützen (173, 174) verschweißt sind und zwei horizontale Platten (180, 182) auf unterschiedlichen Höhen mit den Stützen und den oberen Armen (166) der V-förmigen Elemente verschweißt sind, um als Kindertrageeinrichtung und als Pakettrageeinrichtung für voluminöse Produkte zu dienen.

## Claims

1. A trolley for use by supermarket customers, of the type comprising a base (14, 18; 102; 171, 172) mounted on swivel wheels (17), two vertical members (16; 104, 106; 173, 174) and cross bars (30, 32; 126, 128; 180, 182) connecting said vertical members at their lower and upper parts, said trolley being characterized in that it comprises at least two tubular sleeves (34 to 40; 72 to 78; 122) fixed to the uper parts of the vertical members or to the upper cross bar (32; 126, 128; 180, 182), in a position substantially horizontal and perpendicular to the plane formed by the vertical members, said sleeves each having a longitudinal slit (42; 80; 120) extending the whole way along its lower generatrix, and in that said sleeves serve to attach parallelepipedic bags (44) comprising at their upper parts two pairs of attaching straps (52) consisting of flexible strips fixed by one of their ends to the upper edges of the longitudinal walls of the bag and folded and fixed to themselves at their other ends, in such a way that in the passages formed by the two straps relative to each longitudinal side of the bag it is possible to introduce two rigid rods (54, 56), each rod being slid over at least part of its length inside the sleeves, and the straps passing through the slits in the sleeves.

2. A trolley according to claim 1, characterized in that each sleeve (34 to 40) has a length twice the width of a strap (52) and comprises half way along it an inner stop (63), such that a rod may be introduced into each end of the sleeve, the two rods associated with the same sleeve coming to rest against said inner stop (63).

3. A trolley according to claim 2, characterized in that the two parts of the sleeve situated either side of the inner stop (63) are slightly downwardly inclined with respect to the horizontal, from their free ends to the median portion containing the inner stop, in such a way that the rods accommodated in said sleeve parts have a tendency to slide to rest against the inner stop (63).

4. A trolley according to claim 1, characterized in that the straps (52) of the bag are held gripped around the rods (54, 56) by means of resilient tubular sheaths (86), split longitudinally and having an inner diameter slightly smaller than that of the rods and an outer diameter smaller than the inner diameter of the sleeves, the ends (82) of the sleeves being flared to facilitate the introduction of the rods and having two tongues (84) obtained by folding inwards and upwards the end edges of the sleeve situated either side of the slit (88), to a point where they form stops for the sheaths (86) in the case of accidental withdrawal of the bag.

5. A trolley according to claim 4, characterized in that the sleeves (118) are frusto-conical or frusto-pyramidal in form, the narrow and wide openings thereof having sections which are respectively larger and smaller than the section of the rods (54, 56) of the bags, the wide opening having inward recesses (122) which form stops for the sheaths (86).

6. A trolley according to claim 5, characterized in that each sleeve is slightly downwardly inclined with respect to horizontal, from its end of larger section to its end of smaller section, in such a way that the rod has a tendency to become wedged in said end of smaller section.

7. A trolley accoding to claim 1, characterized in that the lower cross bar (30, 148, 190, 192) is formed as a vertical plate situated at substantially the same level as the bottom of the bag (44) when the latter is in position suspended from the sleeves, in such a way as to serve as a lateral stop for said bottom.

8. A trolley according to claim 7, characterized in that the bottom of the bag is made rigid by a rigid plate (48).

9. A trolley according to claim 1, characterized in that it comprises two identical substantially U-shaped tubular members (10, 12) having vertical arms (16) forming vertical members of the trolley, lower arms (18) bent downwards and rearwards and comprising a horizontal portion on which is fixed a swivel wheel (17) and upper arms (21) inclined upwards and rearwards and ending in a handle (24) for manoeuvring and steering the trolley, and a third U-shaped tubular member (14), the ends of whose arms (26, 28) are fixed by riveting, welding or other means respectively to the tubular members (10, 12), substantially at the level of the lower ends of the vertical members (16), the first two tubular members (10, 12) being arranged in two parallel vertical planes and being connected to each other on the one hand by a lower cross bar (30) consisting of a flat vertical plate and fixed by riveting or welding to the lower ends of the vertical members and on the other hand by an upper cross bar consisting of a horizontal rectangular frame (32) welded by the centres of its small sides to the vertical members.

10. A trolley according to claim 9, characterized in that the first two tubular members (10, 12) are connected together at the upper parts of the vertical members (16) by a rectangular, horizontal panel (66) comprising a peripheral edge (68) turned downwards, the panel having two cut-out portions (70) in the vicinity of its small sides through which the handles (24) of the vertical members (16) may be passed during manufacture, and in that the sleeves (72 to 78) are fixed under said panel.

11. A trolley according to claim 1, characterized in that it comprises two tubular members (100, 102) suitably curved into a U-shape and welded together, the first member (100) comprising the vertical members (104, 106) and the steering handles (107), while the second member (102) forms a base for the trolley and carries four swivel wheels (17).

12. A trolley according to claim 11, characterized in that it comprises a child-carrying basket (130) and package basket (132) fixed between the vertical members (104, 106) to the upper parts of the latter, and either side of the plane formed by the vertical members, the child-carrying basket (130) being parallelepipedic in form with a flat bottom (126) and a front wall (136) mounted pivotally between a vertical hanging position and an inwardly raised position and in which are formed opening (140) for the child's legs to pass through, the package basket (132) being in the form of a truncated pyramid tapering towards the rear of the trolley, and in that the sleeves (118) are fixed under the bottoms (126, 128) of said baskets, the bottom (128) of the package basket being at a higher level than that of the bottom (126), the difference in height (h) being at least equal to the height (h') of the sleeves at their wide openings, in such a way that the package basket of a trolley may fit into the child-carrying basket of another trolley.

13. A trolley according to claim 1, characterized in that it comprises two identical tubular members (160, 162) bent into a V shape, the branches (166, 168) of which end at their ends in steering handles (170) and in horizontal portions (172) carrying swivel wheels (17) and a third substantially U-shaped tubular member (164) the arms (173, 174) of which form vertical members, said vertical members being connected at their lower ends by a U-shaped tubular portion (170) situated in a horizontal plane, the first two tubular members being arranged in two parallel vertical planes and being welded by their branches (166, 168) to the vertical members (173, 174), two horizontal panels (180, 182) being welded, at different levels, to the vertical members and to the upper branches (166) of the V-shaped members to serve respectively as child carriers and baggage carriers for voluminous articles.

FIG.1

FIG.2

FIG.7

EP 0 202 135 B1

FIG. 3

FIG. 4

FIG. 5

FIG.6